# EUROPEAN PATENT APPLICATION

(11) **EP 4 800 857 A1**
(43) Date of publication of application: **02.09.2026**
(21) Application number: 26159569.8
(22) Date of filing: 19.02.2026
(51) Int. Cl.: H01R 24/54

(54) **CONNECTOR**

(30) Priority: 27.02.2025 JP 2025029849
(71) Applicant: Hosiden Corporation, Yao-shi, Osaka 581-0071 (JP)
(72) Inventor: KAWANISHI, Takahide, Yao-shi, 5810071 (JP)
(74) Representative: LBP Lemcke, Brommer & Partner Patentanwälte mbB

(57) **Abstract**

Provided is a connector that allows a shield case to be easily and inexpensively fixed to a rear case and that can be reduced in size and height. A connector 100 includes: a bar-shaped terminal 61 electrically connectable to an internal conductor of a coaxial cable; an insulating holder 62 supporting the terminal 61 inserted therein; a tubular shell 63 electrically connectable to an external conductor of the coaxial cable and fitted onto the holder 62; a shield member 65 in contact with the tubular shell 63; a shield case 66 in contact with the tubular shell 63; and a rear case 10 in intimate contact with the shield case 66. The tubular shell 63 has a tubular body section 63a covering the holder 62, and an annular flange section 63b. The shield case 66 has: a connection section (66d) electrically connected to the flange section 63b; and a constricted tubular section 66c connected to an outer edge 66d1 of the connection section 66d and having a reduced diameter relative to the outer edge 66d1.

## Description

### BACKGROUND OF THE INVENTION

### 1. Field of the Invention

The present disclosure relates to a connector.

### 2. Description of the Related Art

Patent Document 1 (JP 2019-067740A) discloses a connector (a connector module in Patent Document 1) that is electrically connectable to a camera module. This connector includes a bar-shaped electrically conductive terminal (a central conductor in Patent Document 1) that is electrically connectable to an internal conductor of a coaxial cable, an insulating holder (an insulator holder in Patent Document 1) that supports the terminal inserted therein so as to be coaxial with the axis of the terminal, an electrically conductive tubular shell (an electrically conductive shell in Patent Document 1) that is electrically connectable to an external conductor of the coaxial cable and is coaxially fitted onto the holder, an electrically conductive shield case that is in contact with the tubular shell and blocks external electromagnetic waves, and a rear case (a connector case in Patent Document 1) that partially accommodates the shield case.

The shield case is positioned by being clamped between a third engagement recess formed on a side surface of the tubular shell and the rear case. More specifically, the shield case is positioned by hooking an annular elastic section formed on an outer edge of an opening of the shield case, through which the tubular shell is inserted, onto an engagement recess formed on an outer peripheral surface of the tubular shell, and inserting a protrusion of the rear case into a hole formed in a bottom portion of the shield case.

### SUMMARY OF THE INVENTION

Since the elastic section stands upright along the axial direction, at least a predetermined length needs to be secured in order to allow elastic deformation. In addition, considering variations in components, the engagement recess of the tubular shell needs to have an axial length slightly longer than the length of the elastic section. Consequently, the shield case becomes capable of moving slightly in the axial direction relative to the tubular shell. As a result, the height of the connector (the length along the axial direction) becomes longer. Furthermore, in order to completely fix the shield case to the rear case so as not to move in the axial direction or in the circumferential direction, an additional step such as applying heat to crimp the protrusion after inserting the protrusion of the rear case into the hole of the shield case is required, which may lead to an increase in cost. Therefore, the connector described in Patent Document 1 has room for improvement in terms of cost and reduction in height.

There is a need for a connector that allows the shield case to be easily and inexpensively fixed to the rear case and that can be reduced in size and height.

One embodiment of a connector according to the present disclosure is a connector to which a coaxial cable is electrically connectable, and includes: an electrically conductive, bar-shaped terminal electrically connectable to an internal conductor of the coaxial cable; an insulating holder supporting the terminal inserted therein, in such a manner as to be coaxial with an axis of the terminal; an electrically conductive tubular shell fitted onto the holder in such a manner as to be coaxial with the axis, the tubular shell being electrically connectable to an external conductor of the coaxial cable, the tubular shell having: a tubular body section covering the holder; and an annular flange section extending radially outward from the tubular body section; an electrically conductive shield member in contact with the tubular shell and electrically connectable to a mating contact of a mating counterpart; an electrically conductive shield case in contact with the tubular shell and configured to block an external electromagnetic wave, the shield case having: a connection section having an opening through which the tubular body section passes, the connection section being in contact with and electrically connected to the flange section; and a constricted tubular section connected to an outer edge of the connection section and having a reduced diameter relative to the outer edge; and a rear case in intimate contact with the shield case.

According to the present embodiment, the shield case has the constricted tubular section that is connected to the outer edge of the connection section and has a reduced diameter relative to the outer edge, and the rear case is in intimate contact with the shield case. That is to say, the rear case enters into the constricted tubular section. Thus, the shield case is fixed to the rear case and does not come off. In addition, the connector according to the present embodiment does not require a separate component for locking the shield case to the rear case. Thus, the connector according to the present embodiment allows the shield case to be easily and inexpensively fixed to the rear case, and enables reduction in size and height.

In another embodiment of the connector according to the present disclosure, the shield case is in contact with the tubular shell, with at least a portion of the flange section of the tubular shell joined to the shield case.

According to the present embodiment, at least a portion of the flange section of the tubular shell is joined to the shield case. Therefore, the shield case is more reliably electrically connected to the tubular shell compared to a case where the flange section of the tubular shell and the connection section of the shield case are merely in contact with each other.

In another embodiment of a connector according to the present disclosure, the shield case has at least one projection, and the rear case is in intimate contact with an outer surface of the projection.

According to the present embodiment, since the shield case has at least one projection and the rear case is in intimate contact with an outer surface of the projection, the shield case can be fixed more firmly to the rear case so as not to move.

In another embodiment of a connector according to the present disclosure, the rear case has an outer wall perpendicular to the axis, the outer wall has at least one boss for positioning, the shield case has an inner wall parallel to the outer wall and connected to the constricted tubular section, the projection is disposed on the inner wall in such a manner as to protrude toward the outer wall, and the boss is disposed at a location overlapping the projection as viewed along the axis.

According to the present embodiment, the boss is disposed at a location overlapping the projection. Thus, a portion of the rear case that is thick due to the formation of the boss can be thinned by the projection. Therefore, the wall thickness at the portion where the boss is formed can be made substantially the same as the wall thickness at other portions. In the case where the rear case is formed with respect to the shield case by insert molding, the balance of resin flow during molding can be improved, and appearance defects of the rear case caused by, for example, corruption of the boss or sink marks can be suppressed.

### BRIEF DESCRIPTION OF THE DRAWINGS

FIG. 1 schematically shows a configuration of a camera unit including a connector according to a present embodiment.
FIG. 2 is a perspective view of the connector according to the present embodiment.
FIG. 3 is a sectional view taken along line III-III in FIG. 2.
FIG. 4 is an exploded perspective view of the connector.
FIG. 5 is an exploded perspective view of the connector.

### DETAILED DESCRIPTION OF PREFERRED EMBODIMENTS

Hereinafter, an embodiment of a connector according to the present disclosure will be described in detail with reference to the drawings. Note that the embodiment described below is provided as an example for illustrating the connector according to the present disclosure and is not intended to limit the connector to the embodiment alone. Therefore, the connector according to the present disclosure may be implemented in various forms without departing from the spirit of the present disclosure.

In the present embodiment, the connector 100 is provided as part of a camera unit U (an in-vehicle camera) mounted on a vehicle. The camera unit U may also be used for applications other than vehicles, for example, bicycles, drones, and the like.

### Configuration of Camera Unit

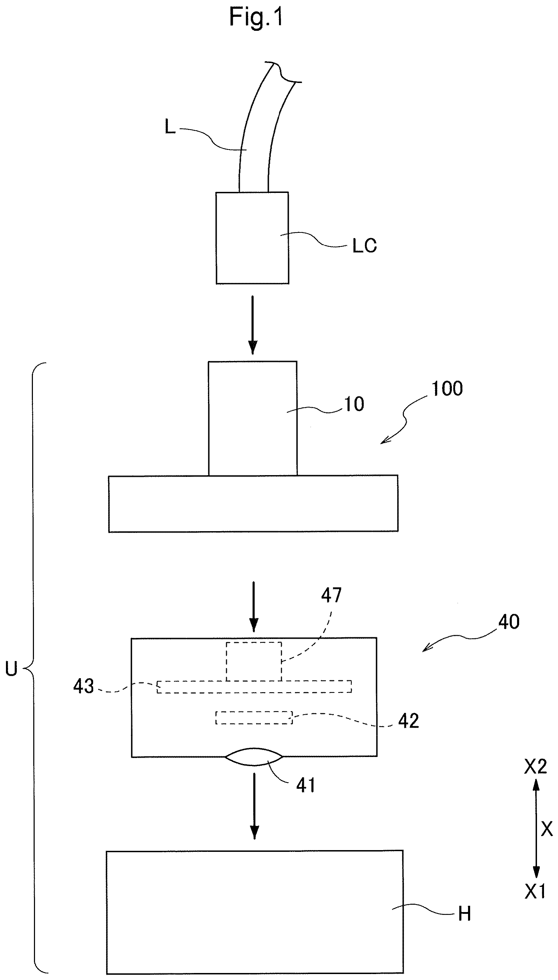

As shown in FIG. 1, the camera unit U can be electrically connected to a monitor device or an in-vehicle electronic control unit (ECU) (not shown) via a coaxial cable L.

The coaxial cable L is a communication cable that transmits high-frequency signals. The coaxial cable L is by coaxially arranging an internal conductor (not shown), which is formed from a bundle of copper wires, and an external conductor (not shown), which is formed from a mesh of copper wires covering the periphery of the internal conductor, with a dielectric (insulator) interposed therebetween. The external conductor functions as a shield that prevents leakage of high-frequency signals and ingress of radio waves from the outside. The coaxial cable L outputs high-frequency signals output from the camera unit U to the monitor device or the in-vehicle ECU. The coaxial cable L also supplies electric power from the monitor device or the in-vehicle ECU to the camera unit U. A plug LC is connected to a leading end of the coaxial cable L, and the coaxial cable L and the connector 100 are electrically connected via the plug LC.

The camera unit U includes a camera case H, a camera module 40 accommodated in the camera case H, and a connector 100 connected to the camera module 40. The camera case H is made of an electrically conductive metal. Although the orientation in which the camera unit U is used is not particularly limited, in the following description, the terms "X1 direction" and "X1 side" refer to the direction and side from which the connector 100 faces the camera module 40, and the terms "X2 direction" and "X2 side" refer to the opposite direction and side. The X1 direction and the X2 direction are collectively referred to as the X direction.

### Configuration of Camera Module

As shown in FIG. 1, the camera module 40 includes: an optical system 41 including at least one lens through which light from a subject enters; an image sensor 42 such as a charge coupled device (CCD) or a complementary metal oxide semiconductor (CMOS) that outputs an electrical signal based on light collected by the optical system 41; and a substrate 43 on which an electronic circuit is mounted that drives and controls the image sensor 42 and processes the electrical signal output from the image sensor 42. A receptacle 47 (an example of a mating counterpart) that outputs a high-frequency signal processed by the electronic circuit is mounted on the substrate 43. The receptacle 47 is included in the camera module 40.

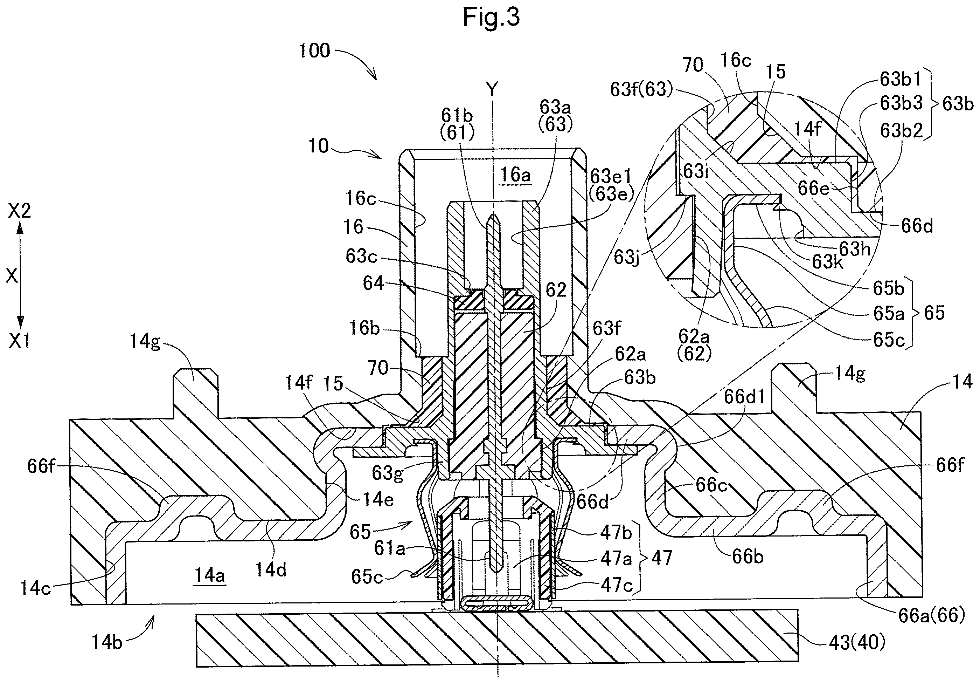

As shown in FIG. 3, the receptacle 47 includes a first contact 47a, a ground contact 47b (an example of a mating contact), and an insulating section 47c. The first contact 47a transmits high-frequency signals. The ground contact 47b is electrically connected to a ground wiring formed on the substrate 43. The ground wiring is a wiring at a ground potential. The insulating section 47c electrically insulates the first contact 47a from the ground contact 47b.

### Configuration of Connector

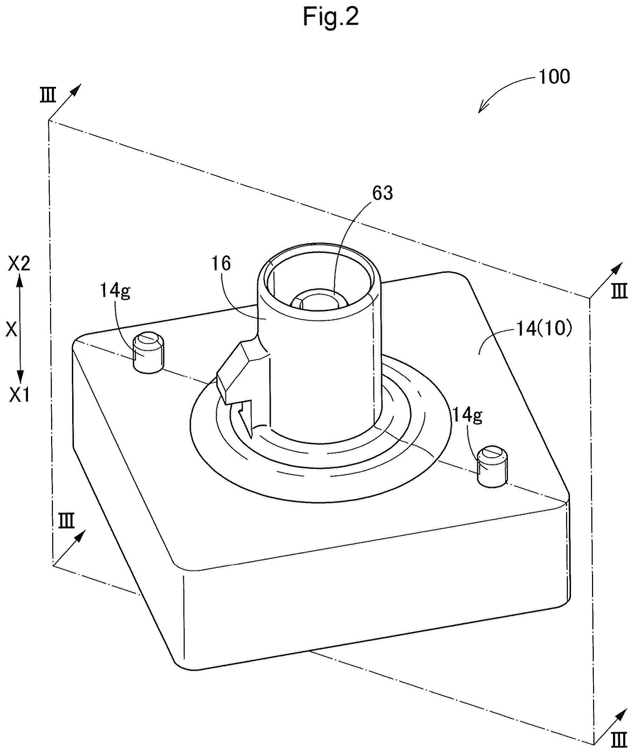

Next, a configuration of the connector 100 according to the present embodiment will be described with reference to FIGS. 2 to 5. The connector 100 includes a housing 10 (an example of a rear case), a signal terminal 61 (an example of a terminal), a holder 62, a tubular shell 63, a bush 64, a connection member 65 (an example of a shield member), a shield case 66, and a sealing section 70.

The housing 10 is made of an insulating material such as resin and has a base section 14 (an example of an outer wall) having a bottomed rectangular-tubular shape, and a fitting section 16 having a cylindrical shape extending in the X2 direction from a bottom portion of the base section 14. The base section 14 has a rectangular shape in a view along the X direction (hereinafter also referred to as a plan view). Hereinafter, the term "center axis Y" refers to an axis parallel to the X direction and passing through the intersection of the diagonals of the rectangle of the base section 14 in a plan view. The term "first opening 14b"refers to an end portion of the base section 14 in the X1 direction, and the term "internal space 14a" refers to a space connected to the first opening 14b and demarcated by the base section 14 (see FIG. 3). A pair of bosses 14g, which have a substantially circular-columnar shape and protrude in the X2 direction, are formed on an X2-side surface of the base section 14 of the housing 10, in the vicinity of two respective corners located on a diagonal of the rectangle. The pair of bosses 14g are provided for positioning the connector 100.

As shown in FIGS. 3 to 5, the base section 14 has first side surfaces 14c, which are four inner wall surfaces including two pairs of parallel inner wall surfaces, connected to the first opening 14b and extending in the X2 direction, and a first bottom surface 14d, which is an inner wall surface connected to X2-side end portions of the four first side surfaces 14c and perpendicular to the X direction, in the internal space 14a of the base section 14 of the housing 10. Also, the base section 14 has a second side surface 14e, which is an inner wall surface connected to the first bottom surface 14d, formed at the center of the first bottom surface 14d, and recessed in a circular shape in a plan view extending in the X2 direction. Furthermore, the base section 14 has a second bottom surface 14f, which is an inner wall surface connected to an X2-side end portion of the second side surface 14e and perpendicular to the X direction. A boundary portion between the second side surface 14e and the second bottom surface 14f is curved so as to bulge radially outward relative to the inner diameter of the second side surface 14e. In other words, the second side surface 14e is formed with a reduced diameter relative to the outer diameter of the second bottom surface 14f.

The fitting section 16 extends in the X2 direction from the center of the second bottom surface 14f. The internal space 14a of the base section 14 is in communication with an internal space 16a of the fitting section 16. The fitting section 16 has a first step 16b protruding radially inward at an intermediate portion in the X direction of its inner peripheral surface 16c. Due to the first step 16b, the inner diameter of the inner peripheral surface 16c decreases on the X1 side relative to the first step 16b. A corner section 15 having a chamfered surface is formed at a boundary between the inner peripheral surface 16c of the fitting section 16 and the second bottom surface 14f.

The signal terminal 61 has a rod shape made of an electrically conductive metal or the like. The axis of the signal terminal 61 is disposed along the X direction so as to be coaxial with the center axis Y of the housing 10.
An end portion of the signal terminal 61 in the X1 direction serves as a first contact end 61a, which is electrically connectable to the first contact 47a of the receptacle 47 of the camera module 40 (see FIG. 3). An end portion of the signal terminal 61 in the X2 direction serves as a second contact end 61b, which is electrically connectable to the internal conductor of the coaxial cable L via the plug LC.

The holder 62 is made of resin and is disposed on an outer peripheral surface of an intermediate portion, in the X direction, of the signal terminal 61. The holder 62 is formed by insert molding and is integrated with the signal terminal 61. In other words, the signal terminal 61 is inserted into and supported by the holder 62. The holder 62 has a cylindrical shape with the signal terminal 61 passing through its center. The holder 62 has, near its X1-side end portion, an integrally formed stopper 62a having an outer diameter relatively larger than that of the other portions of the holder 62.

The tubular shell 63 is made of an electrically conductive metal and is electrically connectable to the external conductor of the coaxial cable L. The tubular shell 63 is fitted onto the holder 62. In other words, the holder 62 is inserted (internally fitted) into the tubular shell 63 and thus held. The tubular shell 63 is disposed coaxially with the center axis Y inside the housing 10 so as to extend from the internal space 14a of the base section 14 to the internal space 16a of the fitting section 16.

The tubular shell 63 includes a tubular body section 63a having a substantially cylindrical shape, and a flange section 63b having an annular plate shape and disposed on the radially outer side of the tubular body section 63a. The flange section 63b extends radially outward from an outer peripheral surface of the tubular body section 63a in a direction perpendicular to the X direction, and has a second step 63b3 extending in the X1 direction at an intermediate portion in the radial direction. Hereinafter, the term "inner flange 63b1" refers to a portion of the flange section 63b located radially inward of the second step 63b3, and the term "outer flange 63b2" refers to a portion located radially outward of the second step 63b3. The inner flange 63b1 and the outer flange 63b2 are parallel to each other and each have an annular plate-shape, and the inner flange 63b1 is located in the X2 direction relative to the outer flange 63b2. An inner edge of an X1-side surface of the outer flange 63b2 has a cutout extending over the entire circumferential direction. Hereinafter, the term "cutout section 63h" refers to a portion remaining after the cutout are formed.

The tubular body section 63a has a small-diameter section 63e to which the plug LC can be connected, a large-diameter section 63f disposed on the X1 side of the small-diameter section 63e and having an outer diameter larger than that of the small-diameter section 63e, and a holder hold section 63g disposed on the X1 side of the large-diameter section 63f and having an outer diameter larger than that of the large-diameter section 63f.
The length of the small-diameter section 63e in the X direction is longer than the length of the large-diameter section 63f in the X direction, and the length of the large-diameter section 63f in the X direction is longer than the length of the holder hold section 63g in the X direction. A boundary between outer peripheral surfaces of the small-diameter section 63e and the large-diameter section 63f in the X direction is located at the same position as the first step 16b of the fitting section 16 of the housing 10 (see FIG. 3). The flange section 63b extends from an X1-side end portion of the large-diameter section 63f, and a corner section 63i having a chamfered surface is formed at a boundary between an X2-side surface of the flange section 63b (inner flange 63b1) and an outer peripheral surface of the large-diameter section 63f.

The inner diameter of the holder hold section 63g in the vicinity of the boundary between the holder hold section 63g and the large-diameter section 63f is larger than the inner diameter of the large-diameter section 63f, and a third step 63j is formed. The stopper 62a of the holder 62 is fitted into a space defined by the holder hold section 63g such that the stopper 62a is in contact with the third step 63j, thereby determining the position of the holder 62 in the X direction relative to the tubular shell 63. The position of the third step 63j in the X direction is the same as the position of an X1-side surface of the inner flange 63b1 of the flange section 63b (see FIG. 3). Note that the holder hold section 63g is inclined such that its diameter gradually decreases from the boundary with the large-diameter section 63f toward the X1 direction (see FIG. 3).

The tubular shell 63 has a plate-shaped support section 63c having a central hole through which the signal terminal 61 can be inserted. The support section 63c extends radially inward from an inner peripheral surface 63e1 of the small-diameter section 63e of the tubular body section 63a. Abush 64 is disposed on the X1 side of the support section 63c so as to be in contact with an X1-side surface and an inner peripheral surface of a hole of the support section 63c.

The bush 64 is made of an elastic material such as rubber and has a substantially annular plate shape with a central hole formed along the X direction through which the signal terminal 61 can be inserted. The holder 62 is disposed on the X1 side of the bush 64. The outer diameter of the holder 62 is substantially the same as the outer diameter of the bush 64. The second contact end 61b of the signal terminal 61 extends to be exposed through the hole of the support section 63c (the hole of the bush 64) on the X2 side of the support section 63c of the tubular shell 63. The provision of the bush 64 can prevent, for example, ingress of moisture from the second contact end 61b side of the signal terminal 61 into the connector 100.

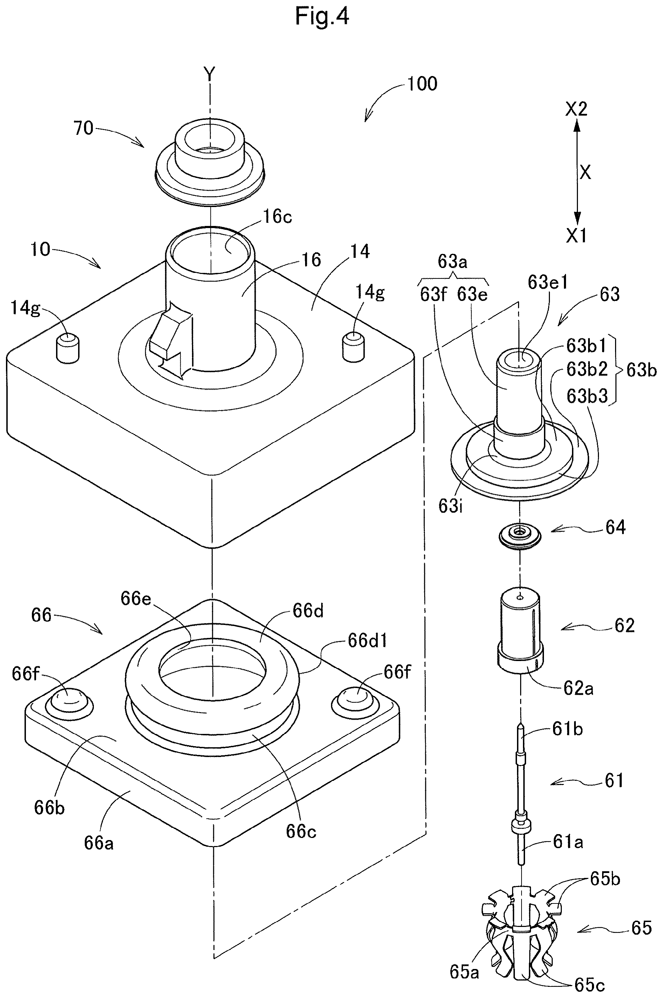

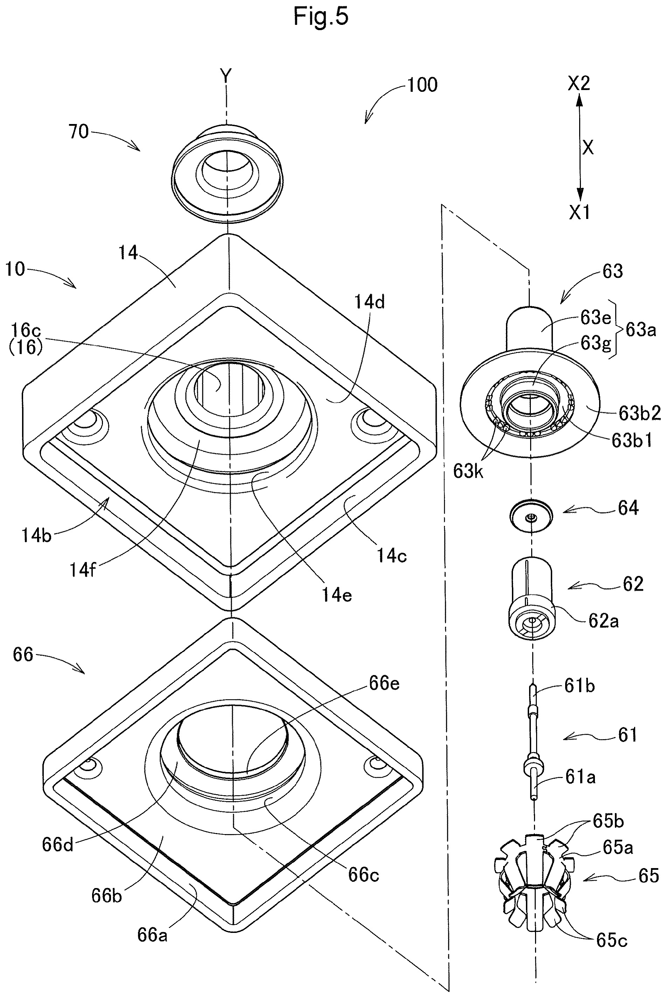

The connection member 65 is made of an elastic and electrically conductive metal and includes an annular section 65a formed by shaping a metal plate into an annular shape, first connection sections 65b, and second connection sections 65c. As shown in FIGS. 4 and 5, the first connection sections 65b extend radially outward in a direction perpendicular to the center axis Y from an X2-side end portion of the annular section 65a. A plurality of (eight in the present embodiment) first connection sections 65b are provided at equal intervals along the circumferential direction of the annular section 65a. The second connection sections 65c extend along the X direction from an X1-side end portion of the annular section 65a. A plurality of (eight in the present embodiment) second connection sections 65c are provided at equal intervals along the circumferential direction of the annular section 65a. In a plan view, each of the first connection sections 65b is located at positions overlapping the respective second connection sections 65c.

The annular section 65a is disposed such that a plate surface of the metal plate is parallel to the X direction and faces an outer peripheral surface of the holder hold section 63g of the tubular body section 63a, either in contact therewith or with a slight gap therebetween. Each of the first connection sections 65b is bent radially outward, approximately 90 degrees from the X2-side end portion of the annular section 65a.

As shown in FIG. 3, each of the first connection sections 65b is disposed in contact with an X1-side surface of the inner flange 63b1 of the flange section 63b. The outer diameter of each first connection section 65b is slightly smaller than the inner diameter of the inner flange 63b1 on the X1 side. A portion of the innermost region of the cutout section 63h, at a location facing each first connection sections 65b, is pressed radially inward and crushed, thereby forming a crimp section 63k. By the crimp section 63k crimping each first connection section 65b, the connection member 65 is fixed to the tubular shell 63, preventing the connection member 65 from coming off the tubular shell 63. At this time, since each first connection section 65b is clamped between the inner flange 63b1 and the crimp section 63k and is in contact therewith, the connection member 65 is electrically connected to the tubular shell 63, enabling external electromagnetic waves to be shielded.

Each of the second connection sections 65c is a plate-shaped member extending in the X1 direction along the X direction from a base end, which is an X1-side end portion of the annular section 65a. Specifically, each second connection section 65c is curved so as to undulate along the X direction, bulging radially outward from the annular section 65a, then bulging radially inward, and ultimately bulging radially outward again. The second connection sections 65c are electrically connectable to the ground contact 47b of the receptacle 47 of the camera module 40 (see FIG. 3).

The shield case 66 is made of a metal such as stainless steel. As shown in FIG. 3, the shield case 66 is in intimate contact with an inner wall surface demarcating the internal space 14a of the base section 14 of the housing 10. Specifically, the shield case 66 is in intimate contact with the inner wall surfaces from the first side surfaces 14c to the second bottom surface 14f of the housing 10. Hereinafter, the term "first tubular wall 66a" refers to a rectangular-tubular portion of the shield case 66 that is parallel to the X direction and in intimate contact with the first side surfaces 14c of the base section 14. The term "first plate-shaped wall 66b" (an example of an inner wall) refers to a flat plate-shaped portion that is perpendicular to the X direction and in intimate contact with the first bottom surface 14d. The term "second tubular wall 66c" (an example of a constricted tubular section) refers to a cylindrical portion that is parallel to the X direction and in intimate contact with the second side surface 14e. The term "second plate-shaped wall 66d" (an example of a connection section) refers to a flat plate-shaped portion that is perpendicular to the X direction and in intimate contact with the second bottom surface 14f.

A second opening 66e (an example of an opening) is formed into which the tubular body section 63a of the tubular shell 63 is inserted, at the center of the second plate-shaped wall 66d of the shield case 66. Also, two projections 66f, each having a substantially frustoconical shape protruding toward the housing 10, are formed in the vicinity of two corners located on a diagonal of the rectangular first plate-shaped wall 66b in a plan view. An outer surface of each of the two projections 66f is also in intimate contact with the housing 10.

The shield case 66 is in intimate contact with the inner wall surfaces of the housing 10. In other words, the housing 10 is in intimate contact with outer surfaces of the shield case 66. An outer edge 66d1 of the second plate-shaped wall 66d, which is located at the boundary between the second tubular wall 66c and the second plate-shaped wall 66d of the shield case 66, has a diameter larger than the outer diameter of the second tubular wall 66c on the X1 side of the boundary. The second side surface 14e and the second bottom surface 14f of the housing 10 are in intimate contact with outer surfaces of the second tubular wall 66c and the second plate-shaped wall 66d of the shield case 66. Thus, the inner diameter of the second side surface 14e is smaller than the diameter of the outer edge of the second bottom surface 14f.

An X1-side surface of the second plate-shaped wall 66d of the shield case 66 is in contact with an X2-side surface of the outer flange 63b2 of the tubular shell 63. The shield case 66 and the tubular shell 63 are thereby electrically connected, making it possible to block external electromagnetic waves. Further, the area between the X1-side surface of the second plate-shaped wall 66d and the X2-side surface of the outer flange 63b2 is joined at least partially by a method such as laser welding. Thus, the shield case 66 and the tubular shell 63 can be electrically connected more reliably compared to a case where the second plate-shaped wall 66d and the outer flange 63b2 are merely in contact with each other. For the most reliable electrical connection between the shield case 66 and the tubular shell 63, it is preferable that the second plate-shaped wall 66d is joined over the entire circumference of the X2-side surface of the outer flange 63b2.

Here, the second step 63b3 between the inner flange 63b1 and the outer flange 63b2 faces the second opening 66e of the shield case 66 with a gap therebetween, and the inner flange 63b1 faces the second bottom surface 14f of the housing 10 with a gap therebetween. Also, the large-diameter section 63f and the corner section 63i of the tubular shell 63 face the inner peripheral surface 16c on the X1 side of the first step 16b of the housing 10 and the corner section 15 with a gap larger than the gap at the flange section 63b. These three gaps are connected. A UV-curable adhesive, such as a silicone-based or acrylic-based adhesive, is injected into these connected gaps and is cured by ultraviolet irradiation, thereby sealing the gaps. Hereinafter, the term "sealing section 70" refers to the sealed portion.

In the connector 100 of the present embodiment, the housing 10 is in intimate contact with the outer surfaces of the first tubular wall 66a, the first plate-shaped wall 66b, the second tubular wall 66c, the second plate-shaped wall 66d, and the pair of projections 66f of the shield case 66. The second tubular wall 66c of the shield case 66 is formed with a reduced diameter relative to the diameter of the outer edge 66d1 of the second plate-shaped wall 66d. This makes it possible to fix the shield case 66 to the housing 10 such that it does not move in the X1 direction or in a rotational direction about the center axis Y, and to reduce the size of the connector 100.

In the connector 100, each of the first connection sections 65b of the connection member 65 extends radially outward in a direction perpendicular to the center axis Y parallel to the X direction, and is electrically connected to the tubular shell 63 by coming into contact with the crimp section 63k. Therefore, the height of the connector 100 can be reduced compared to a configuration in which electrical connection to the tubular shell is achieved in a direction parallel to the center axis Y as in the connector disclosed in Patent Document 1. Thus, the connector 100 can be realized that makes it possible to reliably fix the shield case 66 to the housing 10 and to reduce the size and height.

### Method for Manufacturing Connector

Next, a method for manufacturing the connector 100 will be described. The signal terminal 61 of the connector 100 is formed by cutting or the like, and thereafter the holder 62 is formed by insert molding and integrated therewith. The tubular shell 63 is formed by cutting. At this time, the holder hold section 63g of the tubular shell 63 is formed so as to be parallel to the X direction. The bush 64 is formed by molding.

Next, the annular plate-shaped bush 64 is attached from the X1 side of the tubular shell 63 so as to come into contact with the support section 63c. At this time, the outer peripheral surface of the bush 64 is elastically deformed and comes into intimate contact with the inner peripheral surface 63e1 of the small-diameter section 63e. Then, the signal terminal 61 integrated with the holder 62 is attached from the X1 side of the tubular shell 63. At this time, the holder hold section 63g of the tubular shell 63 is parallel to the X direction and is not inclined as shown in FIG. 3. Therefore, the holder 62 can be smoothly inserted into the tubular shell 63 without deformation. The holder 62 is inserted until the stopper 62a comes into contact with the third step 63j at the boundary between the holder hold section 63g and the large-diameter section 63f. In this state, the second contact end 61b of the signal terminal 61 extends through the bush 64. As a result, the inner peripheral surface of the bush 64 is elastically deformed and comes into intimate contact with the signal terminal 61, but an X1-side surface of the bush 64 does not come into contact with the holder 62. However, a configuration may also be possible in which the holder 62 comes into contact with the X1-side surface of the bush 64 or presses the bush 64 in the X2 direction.

Thereafter, the holder hold section 63g is plastically deformed by riveting so as to gradually decrease in diameter toward the X1 direction, thereby sandwiching the stopper 62a between the third step 63j and the holder hold section 63g. As a result, the signal terminal 61 (holder 62) is held and fixed to the tubular shell 63, and the signal terminal 61 does not come off the tubular shell 63 in the X1 direction.

The shield case 66 is formed by drawing using a press machine. In the shield case 66, the second tubular wall 66c is formed with a reduced diameter relative to the diameter of the outer edge 66d1 of the second plate-shaped wall 66d. Specifically, after forming the second tubular wall 66c by drawing using a press machine, the second plate-shaped wall 66d is formed by pressing the X2-side of the second tubular wall 66c while holding the second tubular wall 66c. In this manner, the second tubular wall 66c of the shield case 66 is formed into an undercut shape relative to the second plate-shaped wall 66d.

Next, the housing 10 is formed by insert molding over the outer surface of the shield case 66. As a result, resin comes into intimate contact with the outer surfaces of the first tubular wall 66a, the first plate-shaped wall 66b, the second tubular wall 66c, the second plate-shaped wall 66d, and the two projections 66f of the shield case 66. In particular, the resin of the housing 10 comes into intimate contact with the entire outer peripheral surface of the second tubular wall 66c having an undercut shape, thereby preventing the shield case 66 from coming off the housing 10 and moving in the X1 direction. Further, since the resin of the housing 10 is also in intimate contact with the entire outer surfaces of the two projections 66f, the shield case 66 does not move in a rotational direction relative to the center axis Y with respect to the housing 10.

As described above, in the connector 100 according to the present embodiment, the housing 10 is formed on the shield case 66 using a simple and inexpensive method, i.e., by insert molding. Thus, the shield case 66 can be fixed to the housing 10 in such a manner as not to move in the X1 direction or in a rotational direction about the center axis Y. Furthermore, with the connector 100, there is no need to separately provide a component for locking the shield case 66 to the housing 10, enabling miniaturization of the connector 100.

Further, at the time of insert molding of the housing 10, the shield case 66 is disposed inside a mold for insert molding after molding such that, in a plan view, each of the two bosses 14g of the housing 10 is formed at a location overlapping one of the two projections 66f of the shield case 66. Since each boss 14g has a substantially cylindrical shape and each projection 66f has a substantially frustoconical shape, the thicker portion of the housing 10 at which the boss 14g is formed can be thinned by the projection 66f by arranging the boss 14g and the projection 66f so as to overlap each other in a plan view. Accordingly, the wall thickness of the housing 10 at the location where the boss 14g is formed can be made substantially the same as the wall thickness at other locations. This makes it possible to improve the balance of resin flow during insert molding and suppress appearance defects of the housing 10 caused by, for example, corruption of the boss 14g or sink marks.

Next, the tubular shell 63, to which the signal terminal 61 and the holder 62 are attached, is inserted from the X1 side into the fitting section 16 of the housing 10, which is insert-molded on the shield case 66. The tubular shell 63 is inserted until the X2-side surface of the outer flange 63b2 comes into contact with the X1-side surface of the second plate-shaped wall 66d of the shield case 66. At this time, with an assembly jig or production apparatus, the tubular shell 63 is inserted to determine the position of the tubular shell 63 relative to the housing 10 such that the axis of the signal terminal 61 coincides with the center axis Y of the housing 10.

Next, the X2-side surface of the outer flange 63b2 and the X1-side surface of the second plate-shaped wall 66d that are in contact with each other is joined, at least partially, by laser welding, for example. As a result, the shield case 66 and the tubular shell 63 are electrically connected to each other reliably. Note that the laser welding may be performed over the entire circumference of the contact surfaces of the outer flange 63b2 and the second plate-shaped wall 66d.

The connection member 65 is formed using a press machine. Then, the connection member 65 is inserted into the shield case 66 from the X1 side, and X2-side surfaces of the first connection sections 65b are brought into contact with the X1-side surface of the inner flange 63b1 of the tubular shell 63. In this state, innermost portions of the cutout section 63h of the tubular shell 63, at locations facing the first connection sections 65b, are pressed radially inward and crushed to form the crimp section 63k (see FIG. 3). Thus, the connection member 65 is fixed to the tubular shell 63, preventing the connection member 65 from coming off the tubular shell 63. At this time, the crimp section 63k comes into contact with the first connection sections 65b, and the connection member 65 is thereby electrically connected to the tubular shell 63.

Lastly, a UV-curable adhesive such as a silicone-based or acrylic-based adhesive is injected using a dispenser or the like into a gap between an inner peripheral surface of the second opening 66e of the shield case 66 and an outer peripheral surface of the inner flange 63b1, and into gaps between the second bottom surface 14f, the corner section 15, and the inner peripheral surface 16c of the housing 10 and the inner flange 63b1, the corner section 63i, and the large-diameter section 63f of the shield case 66. The adhesive is then cured by ultraviolet irradiation to form the sealing section 70. Formation of the sealing section 70 in these gaps suppresses, for example, ingress of moisture into the gaps from between the fitting section 16 of the housing 10 and the tubular shell 63. The assembly of the connector 100 is thereby completed. Note that the sealing section 70 after curing is shown in FIGS. 4 and 5.

As described above, in the connector 100 according to the present embodiment, the housing 10 and the shield case 66 are brought into intimate contact with each other using a simple and inexpensive method, i.e., by performing insert molding to form the housing 10 on the shield case 66, which has the second tubular wall 66c having an undercut shape, and the two projections 66f. Thus, the shield case 66 can be fixed to the housing 10 so as not to move in the X1 direction or in a rotational direction about the center axis Y. Furthermore, with the connector 100 of the present embodiment, there is no need to provide a component for locking the shield case 66 to the housing 10, enabling miniaturization of the connector 100. Furthermore, in the connector 100, each of the first connection sections 65b of the connection member 65 extends radially outward in a direction perpendicular to the center axis Y parallel to the X direction, and is electrically connected to the tubular shell 63 by coming into contact with the crimp section 63k. Therefore, the height of the connector 100 can be reduced.

### Other Embodiments

(1) In the above embodiment, two (a pair of) projections 66f are provided on the shield case 66. However, one or three or more projections 66f may be provided.
(2) In the above embodiment, the shield case 66 is disposed inside a mold for insert molding such that, after insert molding of the housing 10, each of the two bosses 14g of the housing 10 is formed at a location overlapping a corresponding one of the two projections 66f of the shield case 66 in a plan view. However, the invention is not limited thereto. If no appearance defects of the housing 10 occur, such as corruption of the bosses 14g or sink marks, during insert molding of the housing 10, the bosses 14g may be formed so as not to overlap the projections 66f in a plan view. Alternatively, the projections 66f need not be provided if the shield case 66 can be fixed to the housing 10 so as not to move in a rotational direction about the center axis Y by another method.
(3) In the above embodiment, the base section 14 of the housing 10 has a rectangular shape in a plan view. However, the invention is not limited thereto. The base section 14 may alternatively have a circular shape in a plan view, i.e., a bottomed cylindrical shape.
(4) In the above embodiment, the base section 14 of the housing 10 has a tubular shape. However, the invention is not limited thereto. The base section 14 may alternatively have no first side surface 14c and may instead have a plate shape (e.g., a rectangular plate or circular plate shape). In the case where the base section 14 have a plate shape, the first tubular wall 66a of the shield case 66 may be omitted.

The present disclosure is applicable to connectors.

### Reference Signs List

10: Housing (rear case)
14: Base section (outer wall)
14g: Boss
47: Receptacle (mating counterpart)
47b: Ground contact (mating contact)
61: Signal terminal (terminal)
62: Holder
63: Tubular shell
63a: Tubular body section
63b: Flange section
65: Connection member (shield member)
66: Shield case
66b: First plate-shaped wall (inner wall)
66c: Second tubular wall (constricted tubular section)
66d: Second plate-shaped wall (connection section)
66e: Second opening (opening)
66f: Projection
100: Connector
L: Coaxial cable

## Claims

1. A connector (100) to which a coaxial cable (L) is electrically connectable, comprising:
an electrically conductive, bar-shaped terminal (61) electrically connectable to an internal conductor of the coaxial cable (L);
an insulating holder (62) supporting the terminal (61) inserted therein, in such a manner as to be coaxial with an axis of the terminal (61);
an electrically conductive tubular shell (63) fitted onto the holder (62) in such a manner as to be coaxial with the axis, the tubular shell (63) being electrically connectable to an external conductor of the coaxial cable (L),
the tubular shell (63) having:
a tubular body section (63a) covering the holder (62); and
an annular flange section (63b) extending radially outward from the tubular body section (63a);
an electrically conductive shield member (65) in contact with the tubular shell (63) and electrically connectable to a mating contact (47b) of a mating counterpart;
an electrically conductive shield case (66) in contact with the tubular shell (63) and configured to block an external electromagnetic wave,
the shield case (66) having:
a connection section (66d) having an opening (66e) through which the tubular body section (63a) passes, the connection section (66d) being in contact with and electrically connected to the flange section (63b); and
a constricted tubular section (66c) connected to an outer edge (66d1) of the connection section (66d) and having a reduced diameter relative to the outer edge (66d1); and
a rear case (10) in intimate contact with the shield case (66).

2. The connector (100) according to claim 1,
wherein the shield case (66) is in contact with the tubular shell (63), with at least a portion of the flange section (63b) of the tubular shell (63) joined to the shield case (66).

3. The connector (100) according to claim 1 or 2,
wherein the shield case (66) has at least one projection (66f), and
the rear case (10) is in intimate contact with an outer surface of the projection (66f).

4. The connector (100) according to claim 3,
wherein the rear case (10) has an outer wall (14) perpendicular to the axis,
the outer wall (14) has at least one boss (14g) for positioning, the shield case (66) has an inner wall (66b) parallel to the outer wall (14) and connected to the constricted tubular section (66c),
the projection (66f) is disposed on the inner wall (66b) in such a manner as to protrude toward the outer wall (14), and
the boss (14g) is disposed at a location overlapping the projection (66f) as viewed along the axis.
